(19) Europäisches Patentamt / European Patent Office / Office européen des brevets

(11) **EP 4 306 929 A1**

(12) **EUROPEAN PATENT APPLICATION**

(43) Date of publication:
**17.01.2024  Bulletin 2024/03**

(21) Application number: **22184197.6**

(22) Date of filing: **11.07.2022**

(51) International Patent Classification (IPC):
**G01N 15/14** (2006.01)    **G01N 21/63** (2006.01)
**G01N 21/64** (2006.01)

(52) Cooperative Patent Classification (CPC):
**G01N 15/1425; G01N 15/1429; G01N 15/1434;**
**G01N 15/1459; G01N 21/6428; G01N 21/645;**
G01N 2015/1402; G01N 2015/1438;
G01N 2021/6419; G01N 2021/6421;
G01N 2021/6441; G01N 2201/0697

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Ecole Polytechnique Fédérale de**
**Lausanne**
**1015 Lausanne (CH)**

(72) Inventors:
• **MERTEN, Christoph**
**1015 Lausanne (CH)**
• **PANWAR, Jatin**
**1015 Lausanne (CH)**

(74) Representative: **Kuttenkeuler, David**
**SKM-IP PartGmbB**
**Oberanger 45**
**80331 München (DE)**

(54) **FLUOROMETER SYSTEM, FLUORESCENE ANALYSIS METHOD, AND USE THEREOF**

(57)    The invention relates to a fluorometer system for analyzing fluid samples comprising a plurality of particles capable of being labeled with at least two fluorescent labels, in particular two distinct fluorophores. The invention also relates to a fluorescene analysis method for analyzing a fluid sample. Furthermore, the invention relates to the use of such a fluorometer system or fluorescene analysis method.

EP 4 306 929 A1

**Description**

FIELD OF THE INVENTION

The invention relates to a fluorometer system for analyzing fluid samples comprising a plurality of particles capable of being labeled with at least two fluorescent labels, in particular two distinct fluorophores. The invention also relates to a fluorescene analysis method for analyzing a fluid sample. Furthermore, the invention relates to the use of such a fluorometer system or fluorescene analysis method.

DESCRIPTION

Fluorescence analysis has been the backbone of biomolecular quantification studies as it allows specific marking of multiple species for their efficient detection. Droplet microfluidics benefits from these fluorescence analysis principles for compartmentalized quantification of cellular/molecular interactions, secretions and evolution. Utilized methods include fluorescence activated droplet sorting. A wide range of fluorescent biomarkers with varying excitation and emission spectra are used for multispectral analysis. However, crosstalk attenuates the desired precision of known analysis methods. Analysis in droplet microfluidics uses fluorescence readouts based on continuous wave excitation, as described in Mazutis, L. et al. (2013) Single-cell analysis and sorting using droplet-based microfluidics', Nature Protocols, 8(5), pp. 870-891.

Another approach is the use of numerical correction factors to compensate for the extra signal contributed by the crosstalk. Such correction factors are usually measured before the analysis as calibration exercises for specific fluorescence targets and excitation sources and can be applied either in real-time applications like in case of FACS (Bagwell, C.B. and Adams, E.G. (1993) 'Fluorescence Spectral Overlap Compensation for Any Number of Flow Cytometry Parameters', Annals of the New York Academy of Sciences, 677(1), pp. 167-184.) or in post experiment data cleaning if the analysis does not require real-time solutions (Chevrier, S. et al. (2018) 'Compensation of Signal Spillover in Suspension and Imaging Mass Cytometry', Cell Systems, 6(5), pp. 612-620.e5.). Such calibrations, however, are not suitable to compensate crosstalk in droplet microfluidics due to the peculiar nature of droplets that do not allow its contents to have fixed positions within the volume.

It is on object of the present invention to overcome the disadvantages of the state of the art, in particular to provide a fluorescene analysis method and fluorometer system capable of high resolution multispectral analysis of fluid samples, even during a particularly high-volume sample throughput and/or in real time.

BRIEF DESCRIPTION OF THE INVENTION

Generally, the object of the invention is solved by the main aspects of the present invention as described as follows:

In **a first aspect,** the invention pertains to a fluorometer system for analyzing fluid samples comprising a plurality of particles capable of being labeled with at least two fluorescent labels, in particular two distinct fluorophores, comprising:

- at least two excitation sources adapted to emit radiation of a distinct wavelength for excitation of the at least two fluorescent labels;

- at least two optical detectors for detecting radiation in a respective spectrum;
  wherein each optical detector is associated with one respective excitation source,

- a radiation control device configured to operate the excitation sources individually in temporally discrete excitation pulses;

- a data acquisition device coupled to the optical detectors;
  wherein the radiation control device is linked to the data acquisition device such that measurement data is gathered from each optical detector individually during a timeframe corresponding to the excitation pulse of the associated excitation source,

- a predefined trajectory along which the fluid samples are led, wherein the predefined trajectory passes through a target zone for exposing the fluid samples to the radiation from the at least two excitation sources,

- a fluid sample generator for providing the fluid samples to the predefined trajectory,

- a fluid control device configured to cause the fluid sample generator to set a predefined rate at which the fluid samples travel through the predefined target zone,

wherein the radiation control device and the fluid control device are adapted to one another such that at least one respective excitation pulse from each of the at least two excitation sources is at least as fast as the predefined rate.

In **a second aspect,** the invention pertains to a fluorescene analysis method for analyzing a fluid sample, comprising the steps:

    a) providing a fluid sample, preferably wherein the fluid sample comprises a plurality of particles capable of being labeled with at least two fluorescent labels, such as two distinct fluorophores;

    b) moving the fluid sample along a predetermined trajectory passing through a target zone at a predetermined rate;

    c) subjecting the fluid sample with an excitation radiation of a distinct first wavelength for the duration of a first excitation pulse;

    d) subjecting the fluid sample with an excitation radiation of a distinct second wavelength for the duration of a second excitation pulse;

    e) detecting radiation emitted by the fluid sample in a first spectrum associated with the first wavelength;

    f) detecting radiation emitted by the fluid sample in a second spectrum associated with the second wavelength;

wherein the fluid sample is subjected to excitation radiation from distinct excitation pulses while passing through the target zone; and wherein
measurement data associated with the detected radiation is gathered during individual timeframes corresponding to a respective associated excitation pulse.

In **a third aspect,** the invention pertains to a use of a fluorometer system according to the firs aspect and/or a fluorescence analysis method according to the second aspect for high-throughput multi wavelength fluorescence analysis.

In **a fourth aspect,** the invention pertains to a use of a fluorometer system according to the first aspect and/or a fluorescence analysis method according to the second aspect for fluorescence activated sorting, in particular in fluids

In **a fifth aspect,** the invention pertains to a use of a fluorometer system according to the first aspect and/or a fluorescence analysis method according to the second aspect for fluorescence activated droplet fusion, in particular in fluids.

DETAILED DESCRIPTION OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In **a first aspect,** the invention pertains to a fluorometer system for analyzing fluid samples comprising a plurality of particles capable of being labeled with at least two fluorescent labels, in particular two distinct fluorophores, comprising:

- at least two excitation sources adapted to emit radiation of a distinct wavelength for excitation of the at least two fluorescent labels;

- at least two optical detectors for detecting radiation in a respective spectrum;
  wherein each optical detector is associated with one respective excitation source,

- a radiation control device configured to operate the excitation sources individually in temporally discrete excitation pulses;

- a data acquisition device coupled to the optical detectors;
  wherein the radiation control device is linked to the data acquisition device such that measurement data is gathered from each optical detector individually during a timeframe corresponding to the excitation pulse of the associated excitation source,

- a predefined trajectory along which the fluid samples are led, wherein the predefined trajectory passes through a target zone for exposing the fluid samples to the radiation from the at least two excitation sources,

- a fluid sample generator for providing the fluid samples to the predefined trajectory,

- a fluid control device configured to cause the fluid sample generator to set a predefined rate at which the fluid samples travel through the predefined target zone,

wherein the radiation control device and the fluid control device are adapted to one another such that at least one respective excitation pulse from each of the at least two excitation sources is at least as fast as the predefined rate.

Accordingly, a fluorometer system is provided which is suitable, in particular configured, for analyzing fluid samples comprising a plurality of particles capable of being labeled with at least two fluorescent labels, in particular two distinct fluorophores. In a preferred embodiment, fluid samples comprise a plurality of particles capable of being labeled with more than two fluorescent labels, such as at least three different fluorescent labels or at least five different fluorescent labels. Fluid samples are preferably selected from a group comprising or consisting of droplets, plugs, beads, proteins, biomarkers, multiple cells, singular cells, or a combination thereof. Fluid samples shall be understood to samples containing or consisting of a liquid phase. Preferably, the liquid phase content or contents of fluid samples may constitute at least 50%, in particular at least 75%, preferably at least 90% of the fluid samples.

Fluorescent labels include but are not limited to fluorophores. Alternatively or additionally, a fluorescent label can refer to refer to a naturally occurring fluorescent property of a sample without the addition of a dye, such as a fluorophore; examples for such samples include self-fluorescing cells or enzymes. Fluorescent labels can consist of fluorophores. Fluorophores generally designate dyes configured to stain tissues, cells or other sample materials for fluorescent spectroscopy analysis. Fluorophores may in particular be configured for antibody labelling. Distinct fluorophores or generally distinct fluorescent labels are differently colored, or in other words have different excitation and/or emission spectra. Fluorophores include inter alia hydrazide-trilithium salt (aka Cascade Blue), fluorescein, in particular 5-(and-6-)carboxyfluorescein diacetate, succinimidyl ester; and phosphate-buffered saline. A fluorophore generally absorbs light energy of a specific wavelength and re-emits light at a longer wavelength. Fluorophores may be referred to as fluorochromes. It may be preferred that the fluorometer system comprises at least one application means to subject the fluid samples to at least one fluorescent label. The fluorometer system may be equipped with two, three or even more application means, such as syringe pumps, configured to subject the samples comprising particles capable of being labeled with a number of distinct fluorescent labels, in particular distinct fluorophores.

The fluorometer system comprises at least two excitation sources adapted to emit radiation of a distinct wavelength for excitation of the at least two fluorescent labels. An excitation source may generally refer to a light source configured to emit light energy at a wavelength and/or spectrum adapted to excite at least one fluorescent label. Preferably, each excitation source of the fluorometer system is adapted specifically to excite one, preferably no more than one, predetermined fluorescent label, such as a fluorophore supplied through an application means of the fluorometer system. An excitation source may be configured to act as a source of light energy of a predetermined excitation wavelength, in particular a predetermined peak wavelength for excitation, associated with a predetermined excitation spectrum surrounding said predetermined excitation wavelength, which may be defined as an excitation bandwidth. An excitation wavelength may be defined in the range of ultraviolet light through the visible light spectrum. The visible spectrum refers to wavelengths in the the range of 380 nm - 780 nm. The visible spectrum can be divided further into the violet spectrum (380nm - 430 nm), the blue spectrum (430nm - 490 nm), the green spectrum (490 nm - 570 nm), the yellow spectrum (570 nm - 600 nm), the orange spectrum (600 nm - 640 nm) and the red spectrum (640 nm - 780 nm). The ultraviolet spectrum includes near UV (315 nm - 380 nm), medium UV (280 nm - 315 nm) and Far UV (20 nm - 280 nm). An excitation source may for example be a laser light source.

The fluorometer system further comprises at least two optical detectors for detecting radiation in a respective spectrum, wherein each optical detector is associated with one respective excitation source. An optical detector is generally configured to detect light radiation in a respective predetermined detection spectrum. The detection spectrum may be defined as a detection bandwidth. The excitation bandwidth may be defined in the ultraviolet spectrum, the visible spectrum and even the near infrared spectrum (780 nm - 3 mm). Preferably, each optical detector may be adapted specifically for detection of one predetermined fluorescent label, such as a fluorophore supplied through an application means of the fluorometer system. Preferably, in the fluorometer system, the number of optical detectors corresponds, in particular is equal to, the number of excitation sources of the system. It may be preferred that the peak excitation wavelength of a respective excitation source is smaller than the peak detection wavelength and/or mean detection wavelength of the optical detector associated with said excitation source. For instance, a first excitation source may be configured to emit violet radiation and the associated first optical detector for detection of light in the blue spectrum; a second excitation source may be configured to emit blue radiation and the associated second optical detector for detection of light in the green spectrum, and a third excitation source may be configured to emit green radiation and the associated third optical detector for detection of light in the red spectrum. An optical detector may for example include a photodiode, preferably additionally a photomultiplier, particularly provided with at least one optical bandwidth filter, wherein the photomultiplier and/or filter defines the detection bandwidth.

The fluorometer system according to the invention comprises a radiation control device configured to operate the excitation sources individually in temporally discrete excitation pulses. The radiation control device may comprise at least one modulator configured to define the preferably constant duration of each one of the excitation pulses. A modulator may be configured to cause excitation pulses, preferably excitation pulses of an essentially constant duration, to be triggered at a predetermined pulse excitation rate, preferably a predetermined pulse excitation frequency. Excitation pulses are temporarily discrete in that the excitation pulses do not overlap with each other. Each discrete excitation pulse for activation of an individual excitation source (first excitation source9) begins only when the previous pulse, in particular from a different excitation source (second excitation source) of the fluorometer system, has ceased and ends prior to the the subsequent excitation pulse, preferably for another excitation source of the fluorometer system (the second or a third excitation source). Individual operation of the at least two excitation sources shall be understood to indicate that the emission of light from each excitation source is controlled by the radiation control device by itself. The radiation control device can operate each excitation source individually, for example by selectively energizing the excitation source for light emission for the respective excitation pulse and/or by triggering a shutter, blind, mirror or other means for directing light from the excitation source towards the sample for the respective excitation pulse or otherwise away from the sample, in particular a predefined trajectory thereof and/or a predefined, particularly stationary, target zone of the fluorometer system. In particular, the at least two excitation sources comprise or consist of at least one laser beam source, preferably one laser beam source each, for generating a laser beam aimed at the target zone. Optionally, at least a third excitation source adapted to emit radiation of a third wavelength, and at least one third optical detector for detecting radiation of in a third spectrum. A excitation system may be provided for guiding radiation from the excitation sources to the target zone comprising at least one light guide, in particular at least one fiber-optic cable.

Additionally, the fluorometer system comprises a data acquisition device coupled to the optical detectors wherein the radiation control device is linked to the data acquisition device such that measurement data is gathered from each optical detector individually during a timeframe corresponding to the excitation pulse of the associated excitation source. The data acquisition device may comprise at least one computation device configured to execute a method, or at least parts of a method. The data acquisition device may comprise one or more electronic filters, such as electronic switches, operable to selectively enable data transfer from no more than one respective optical detector to an electronic input, such as an analogue-digital-converter, during a timeframe. Additionally or alternatively, the data acquisition device may be configured with at least one computer implemented method for gathering measurement data from only one respective optical detector at a time, in particular depending on a condition related to the excitation source associated with the respective optical detector.

Furthermore, the fluorometer system according to the invention comprises a predefined trajectory along which the fluid samples are led, wherein the predefined trajectory passes through a target zone for exposing the fluid samples to the radiation from the at least two excitation sources, and a fluid sample generator for providing the fluid samples to the predefined trajectory, as well as a fluid control device configured to cause the fluid sample generator to set a predefined rate at which the fluid samples travel through the predefined target zone. Th predefined target zone may be defined by the intersection of the predefined sample trajectory and the light rays, preferably the laser beam, of the at least two excitation sources. Preferably, the target zone of the fluorometer system may be defined as a spot where the predefined sample trajectory is met by at least one focal point of at least one excitation source, particularly by several, preferably all, focal points of each excitation source of the system. The predefined trajectory may for example correspond to the path of a channel, in particular a microchannel, for guiding the fluid samples, or a preferably constant travel path, such as a flight path, along which the fluid sample, such as droplets, travel upon ejection from a fluid sample generator. The fluid control device may preferably be configured to set the predefined rate such that the predefined target zone is passed by the microfluidic samples travel at a frequency in the range of 1 Hz to 30 kHz. Preferably, the fluid sample generator may be set in accordance with the desired predefined rate of travel through the target zone. Alternatively, setting the fluid sample generator may include calibrating the sample generator to account for acceleration, such as acceleration due to gravity, and/or deceleration, such as deceleration due to friction, of the fluid samples between an ejection port of the fluid sample generator and the target zone. The rate at which fluid samples exit from the fluid sample generator's ejection port may be equal to the rate at which the samples enter the target zone.

In the fluorometer system according to the invention, the radiation control device and the fluid control device are adapted to one another such that at least one respective excitation pulse from each of the at least two excitation sources is at least as fast as the predefined rate. The pulse excitation rate shall preferably be configured such that each sample is met by at least one pulsed excitation from each excitation source while the sample is in the target zone. Each cycle including excitation pulses of all excitation sources involved as well as the sensing of light emitted by the sample by the associated optical detectors shall be completed at least once for each sample unit, such as a droplet. Thereby, the data acquision device is enabled to capture at least one data point for each color channel defined by a respective excitation source and associated optical detector.

The fluorometer system according to the invention is superior to common analysis devices. It is capable of preventing crosstalk in real time, rather than merely utilizing a numerical compensation factor for post-experiment data analysis. Real time data analysis and decision making, for example for droplet sorting or droplet fusion, is thereby greatly enhanced. Furthermore, unlike the prior art, the invention does not require any calibration of the analysis instrument. It is particularly advantageous in that crosstalk can be significantly reduced or even avoided completely without any user defined correction factors, which in some cases may be detrimental measurement reliability in case arbitrary or faulty factors are input.

In a preferred embodiment of a fluorometer system according to the invention, the radiation control device is adapted to the fluid control device for subjecting each one of the fluid samples to at least two, preferably 5 or 6, excitation pulses from each excitation source. It may be preferred that the radiation control device is adapted to the fluid control device for subjecting each one of the fluid samples to a number of excitation pulses from each excitation source in the range of 1 to 100, preferably 2 to 20, more preferably 4 to 10. The radiation control device may for instance be configured to cause a modulated a pulse excitation at a predetermined pulse excitation rate, preferably a predetermined pulse excitation frequency. The pulse excitation frequency may be defined within a range from 100 Hz to 10 MHz, in particular between 1 kHz and 1 MHz, more particularly between 50 kHz and 200 kHz. The pulse excitation rate, in particular frequency, may be equal to a multiple, in particular a multiple integer, of the sample passing rate at which the fluid samples pass through the predefined target zone. The ratio of the pulse excitation rate with respect to the rate of passing (of a sample through the target zone) corresponds to the resolution of fluorescence analysis. The ratio is at least 1. The ratio may preferably be larger than 1, in particular in the range 2 to 20, more particularly in the range 4 to 10. A relatively low pulse excitation rate, such as 100 Hz, may correspond to a low resolution. A low resolution may be desired for preliminary testing or to limit the volume of measurement data. A relatively high pulse excitation rate, such as 10 MHz, may correspond to a high resolution. A high resolution may be selected if measurement data of particularly high precision or reliability is desired.

According to one embodiment of a fluorometer system, the radiation control device is configured to operate the excitation sources to emit excitation pulses having an excitation pulse duration greater than a fluorescence risetime of the fluorescent labels and/or having an excitation pulse duration in the range of 50 ns to 1000 $\mu$s, in particular 100 ns to 500 $\mu$s, more particularly 100 ns to 500 ns. Additionally, the radiation control device may be configured to operate the excitation sources such that a, preferably constant, pause duration between subsequent excitation pulses is no larger than, preferably smaller than, the excitation pulse duration. In particular, the pause duration between subsequent excitation pulses lasts for between 5% and 50%, preferably between 10 % and 30%, of an excitation pulse duration. The pause duration is preferably at least as long as, in particular longer than, a fluorescence lifetime and risetime of the fluorescent labels. For example, the excitation pulse duration may be configured to last for 300 ns and the pause duration for 50 ns, such that it can be ascertained that radiation emitted by a fluorescent sample excited by a first excitation pulse defined by a first spectrum is no longer present during the subsequent excitation of the sample by subsequent first excitation pulse defined by a second spectrum, thereby avoiding crosstalk.

According to one embodiment, the fluid sample generator is a microdroplet generator for creating microdroplet samples, wherein the microdroplet samples each comprise one or more particles of the plurality of particles, preferably wherein the one or more particles are selected from one or more cell(s) and/or one or more non-cell particle(s), wherein preferably the microdroplet samples comprise microdroplets generated to have an average width, in particular an average diameter, of no more than 250 $\mu$m, in particular no more than 100 $\mu$m.

According to a first further development, the fluid sample generator is a fluid system, in particular a flow focusing droplet generator, for monodispersion of aqueous microdroplet samples in an inert carrier medium, such as an oil, preferably a hydrophobic and/or lipophobic oil, wherein the predetermined trajectory is defined by a fluid channel, in particular a microfluidic channel. The fluid sample generator may comprise or consist of a flow focusing droplet generator which has several aqueous phase inlets for samples and fluorescent labels and a pair of two opposite oil inlets for separating a continuous flow of sample material into individual beads or droplets.

According to a second further development, the fluid sample generator is a microdroplet dispenser, such as an ultrasonic nozzle vibrator, wherein the trajectory is defined downstream of the fluid sample generator. The trajectory may be defined as a substantially vertical falling direction downward of the fluid sample generator. Alternatively, the trajectory may be defined by a channel, in particular a fluid channel, more particularly a microfluidic channel.

In a further embodiment of a fluorometer system, at least two excitation sources comprise at least one respective modulator for defining the excitation pulses, in particular an optical modular, preferably an acousto-optic-modulator, wherein in particular the modulator has an activation threshold above which the modulator enables the excitation radiation and below which the optical modulator prevents the excitation radiation. For example, the modulator may have a nominal activation voltage of 3 V corresponding to a high value of a TTL (transistor-transistor-logic) pulse for activation of a respective excitation source, and a threshold voltage of 2,5 V above which radiation is provided by the excitation source. The fluorometer system may optionally include a radiation control device adapted to control the data acquisition device corresponding to a, preferably predetermined, excitation activation delay and/or excitation deactivation delay, wherein in particular the excitation activation delay and/or excitation deactivation delay is adapted in accordance with an activation threshold of the modulator. The delay can for example be applied manually or automatically using a self reference signal. In case the electronic activation signal provided by the radiation control device is not an ideal, digital pulsed signal consisting exclusively of "high" and "low" values, but rather a curve including rising and falling slopes, for example due to capacitive and/or inductive components, the modulator may be configured to account for delays in the rise and/or fall of the pulse-modulated curve by defining the pulse duration and/or timeframe longer than, in particular at least two or three times as large as, the rise time, and optionally the pause duration at least as long as the fall time.

In a preferred embodiment of the fluorometer system, the radiation control device is configured to synchronize the timeframes and the excitation pulses. For synchronizing the timeframes and excitation pulses, a controller device, such as a FPGA (field programmable gate array) may be provided which is, on the one hand, coupled with the radiation control device, particularly the optical modulators thereof, and on the other hand to the optical detector and/or data acquisition device, so as to operate the later only while the former is actively operated to subject the target zone and sample passing therethrough with light provided by an excitation pulse.

Optionally, the fluorometer system according to the invention includes at least two excitation sources are adapted to emit radiation with a wavelength in the range of 200 nm to 3000 nm, preferably in the visible range of 380 nm to 780 nm. In particular the at least two excitation sources comprise at least a first light source adapted to emit radiation with a first wavelength in the range of 380 nm to 430 nm, preferably a first wavelength of approximately 405 nm. Alternatively or additionally, the at least two excitation sources comprise at least a second light source adapted to emit radiation with a second wavelength in the range of 430 nm to 490 nm, preferably a second wavelength of approximately 473 nm. Optionally, the at least two excitation sources comprise at least a third light source adapted to emit radiation with a third wavelength in the range of 490 nm to 570 nm, preferably a third wavelength of approximately 461 nm.

Additionally or alternatively, the at least two optical detectors include a respective bandpass filter defining a respective spectrum width of less than 100 nm, in particular less than 50 nm, and/or defining a respective mean spectrum wavelength larger than the distinct wavelength of the respective associated excitation source, and/or defining a respective minimum spectrum wavelength larger than the distinct wavelength of the respective associated excitation source. A first optical detector associated with such a first excitation source may be adapted, in particular with a bandwidth filter, dichroic mirror and/or beam splitter, to detect radiation with a mean wavelength of 445 nm, in particular with a bandwidth between 20 nm and 100 nm, more particularly a bandwidth of 45 nm. A second optical detector associated with such a second excitation source may be adapted, in particular with a bandwidth filter, dichroic mirror and/or beam splitter, to detect radiation with a mean wavelength of 525 nm, in particular with a bandwidth between 20 nm and 100 nm, more particularly a bandwidth of 45 nm. A third optical detector associated with such a third excitation source may be adapted, in particular with a bandwidth filter, dichroic mirror and/or beam splitter, to detect radiation with a mean wavelength of 605 nm, in particular with a bandwidth between 20 nm and 100 nm, more particularly a bandwidth of 40 nm. It may be preferred to adapt the optical detectors and associated excitation sources corresponding at least one respective predetermined fluorescent label, particularly fluorophore, such that the two or more detection bandwidths are distinct, preferably without overlap. Thereby, crosstalk can be reduced or even eliminated.

In **a second aspect,** the invention pertains to a fluorescene analysis method for analyzing a fluid sample, comprising the steps:

a) providing a fluid sample, preferably wherein the fluid sample comprises a plurality of particles capable of being labeled with at least two fluorescent labels, such as two distinct fluorophores;

b) moving the fluid sample along a predetermined trajectory passing through a target zone at a predetermined rate;

c) subjecting the fluid sample with an excitation radiation of a distinct first wavelength for the duration of a first excitation pulse;

d) subjecting the fluid sample with an excitation radiation of a distinct second wavelength for the duration of a second excitation pulse;

e) detecting radiation emitted by the fluid sample in a first spectrum associated with the first wavelength;

f) detecting radiation emitted by the fluid sample in a second spectrum associated with the second wavelength;

Preferably, the fluid sample is subjected to excitation radiation from distinct excitation pulses while passing through the target zone; and wherein measurement data associated with the detected radiation is gathered during individual timeframes corresponding to a respective associated excitation pulse.

The fluid sample is subjected to excitation radiation from distinct excitation pulses while passing through the target zone. The measurement data associated with the detected radiation is gathered during individual timeframes corresponding to a respective associated excitation pulse. It may be preferred that the method steps are repeated for a multitude of subsequent fluid samples. Particularly step a) may be performed repeatedly so as to provide a multitude of fluid samples, such as microdroplets. One or more optional additional step may include i) subjecting the fluid sample with an excitation radiation of a distinct further wavelength for the duration of a further excitation pulse; and ii) detecting radiation emitted by the fluid sample in a further spectrum associated with the further wavelength.

In a preferred embodiment, the fluid sample is subjected to at least two, preferably 5 or 6, excitation pulses from each excitation source while passing through the target zone. Preferably, steps c) and d) are executed at least once, preferably multiple times, with the duration step b) regarding a single sample.

In another embodiment of the fluorescene analysis method, the first and/or second excitation pulse are maintained for a pulse duration in the range of 50 ns to 500 ns, in particular 100 ns to 300 ns, and/or a pulse duration which is longer than the fluorescence risetime of the fluorescent labels. This may apply to optional further excitation pulses as well.

According to a preferred embodiment of the fluorescene analysis method, at least one fluid sample is generated as a microdroplet sample, preferably containing an individual cell, labeled with at least one fluorophore, wherein preferably the microdroplet samples have an average width, in particular an average diameter, of no more than 500 μm, in particular no more than 100 μm. Preferably, a multitude of fluidic samples is provided for passing through the target zone at a frequency of frequency in the range of 1 Hz to 30 kHz, in particular in the range between 90 kHz and 110 kHz.

Preferably, the timeframes are synchronized with the excitation pulse. In particular c) and e) are synchronized, and/or steps d) and f) are synchronized. Optional additional steps i) and ii) are preferably also synchronized with one another.

In a preferred embodiment of the fluorescence analysis method, the timeframes are defined on the basis of the pulse duration and at least one excitation activation delay and/or excitation deactivation delay, for example in accordance with an activation threshold of a modulator.

It may be preferred that the distinct wavelengths for excitation are selected in the range of 200 nm to 3000 nm, preferably in the visible range of 380 nm to 780 nm, in particular for all of the steps c), d) and i). In particular, preferably for step c), the distinct first wavelength is selected in the range of 380 nm to 430 nm, preferably a first wavelength of approximately 405 nm. Alternatively or additionally, particularly for step d), the distinct second wavelength is selected in the range of 430 nm to 490 nm, preferably a second wavelength of approximately 473 nm. Optionally, in particular for step i), the distinct third wavelength is selected in the range of 490 nm to 570 nm, preferably a third wavelength of approximately 461 nm.

Additionally, or alternatively, in an embodiment of the fluorescent analysis method, radiation emitted by the fluorescent labels is filtered prior to detection in accordance with a bandpass filer defining he spectrum associated with the respective first or second or optionally third wavelength, wherein the spectrum to be detected is limited to a spectrum width of less than 100 nm, in particular less than 50 nm. Preferably, the filtering is performed in accordance with a spectrum defined by a mean spectrum wavelength and/or by a minimum spectrum wavelength which is larger than the associated distinct wavelength. Steps e) and f) and optionally ii) include filtering radiation emitted by the fluorescent labels of a fluid sample within the target zone in accordance with a respective spectrum associated with the corresponding first, second or further wavelength.

In another embodiment of the fluorescent analysis method which may be combined with the aforementioned ones, providing the at least one fluid sample, particularly in step a), includes labelling the at least one fluid sample with at least two fluorescent labels, such as fluorophores. Fluorophores may in particular be selected from the list consisting of cascade blue, fluorescine, fluorolol, pyrromethene, and phosphate-buffered saline.

Preferably, the above-mentioned use of the above-mentioned fluorometer system is configured in accordance with the above-mentioned fluorescent analysis method. Alternatively or additionally, it may be preferred that the above-mentioned fluorescent analysis method employs e above-mentioned fluorometer system.

The invention also relates to the use of the above-mentioned fluorometer system and/or the use of the above-mentioned fluorescent analysis method for high-throughput multi wavelength fluorescence analysis.

The invention additionally relates to the use of the above-mentioned fluorometer system and/or the use of the above-mentioned fluorescent analysis method for fluorescence activated sorting, in particular in fluid.

The invention furthermore relates to the use of the above-mentioned fluorometer system and/or the use of the above-mentioned fluorescent analysis method for fluorescence activated droplet fusion, in particular in fluids.

In **a third aspect,** the invention pertains to a use of a fluorometer system according to the firs aspect and/or a fluorescence analysis method according to the second aspect for high-throughput multi wavelength fluorescence analysis.

In **a fourth aspect,** the invention pertains to a use of a fluorometer system according to the first aspect and/or a fluorescence analysis method according to the second aspect for fluorescence activated sorting, in particular in fluids

In **a fifth aspect,** the invention pertains to a use of a fluorometer system according to the first aspect and/or a fluorescence analysis method according to the second aspect for fluorescence activated droplet fusion, in particular in fluids.

The terms "of the [present] invention", "in accordance with the invention", "according to the invention" and the like, as used herein are intended to refer to all aspects and embodiments of the invention described and/or claimed herein.

As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by $\pm 20\%$, $\pm 15\%$, $\pm 10\%$, and for example $\pm 5\%$. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated.

It is to be understood that application of the teachings of the present invention to a specific problem or environment, and the inclusion of variations of the present invention or additional features thereto (such as further aspects and embodiments), will be within the capabilities of one having ordinary skill in the art in light of the teachings contained herein.

Unless context dictates otherwise, the descriptions and definitions of the features set out above are not limited to any particular aspect or embodiment of the invention and apply equally to all aspects and embodiments which are described.

All references, patents, and publications cited herein are hereby incorporated by reference in their entirety.

In view of the above, it will be appreciated that the present invention also relates to the following itemised embodiments:

Item 1: Fluorometer system for analyzing fluid samples comprising a plurality of particles capable of being labeled with at least two fluorescent labels, in particular two distinct fluorophores, comprising:

at least two excitation sources adapted to emit radiation of a distinct wavelength for excitation of the at least two fluorescent labels;

at least two optical detectors for detecting radiation in a respective spectrum;

wherein each optical detector is associated with one respective excitation source,

a radiation control device configured to operate the excitation sources individually in temporally discrete excitation pulses;

a data acquisition device coupled to the optical detectors;

wherein the radiation control device is linked to the data acquisition device such that measurement data is gathered from each optical detector individually during a timeframe corresponding to the excitation pulse of the associated excitation source,

a predefined trajectory along which the fluid samples are led, wherein the predefined trajectory passes through a target zone for exposing the fluid samples to the radiation from the at least two excitation sources,

a fluid sample generator for providing the fluid samples to the predefined trajectory,

a fluid control device configured to cause the fluid sample generator to set a predefined rate at which the fluid samples travel through the predefined target zone,

wherein the radiation control device and the fluid control device are adapted to one another such that at least one respective excitation pulse from each of the at least two excitation sources is at least as fast as the predefined rate.

Item 2: Fluorometer system according to item 1, wherein the radiation control device is adapted to the fluid control device for subjecting each one of the fluid samples to at least two, preferably 5 or 6, excitation pulses from each excitation source.

Item 3: Fluorometer system according to item 1 or 2, wherein the radiation control device is configured to operate the excitation sources to emit excitation pulses having an excitation pulse duration greater than a fluorescence risetime of the fluorescent labels and/or having an excitation pulse duration in the range of 50 ns to 1000 $\mu$s, in particular 100 ns to 500 $\mu$s, more particularly 100 ns to 500 ns.

Item 4: Fluorometer system according to one of the preceding items, wherein the fluid sample generator is a microdroplet generator for creating microdroplet samples, wherein the microdroplet samples each comprise one or more particles of the plurality of particles, preferably wherein the one or more particles are selected from one or more cell(s) and/or one or more non-cell particle(s), wherein preferably the microdroplet samples comprise microdroplets generated to have an average width, in particular an average diameter, of no more than 500 $\mu$m or no more than 250 $\mu$m, in particular no more than 100 $\mu$m.

Item 5: Fluorometer system according to item 4, wherein the fluid sample generator is a fluid system, in particular a flow focusing droplet generator, for monodispersion of aqueous microdroplet samples in an inert carrier medium, such as an oil, preferably a hydrophobic and/or lipophobic oil, wherein the predetermined trajectory is defined by a fluid channel.

Item 6: Fluorometer system according to item 4, wherein the fluid sample generator is a microdroplet dispenser, such as an ultrasonic nozzle vibrator, wherein the trajectory is defined downstream, preferably in a substantially vertical falling direction downward, of the fluid sample generator or by a channel, in particular a fluid channel.

Item 7: Fluorometer system according to one of the preceding items, wherein at least two excitation sources comprise at least one respective modulator for defining the excitation pulses, in particular an optical modular, preferably an acousto-optic-modulator, wherein in particular the modulator has an activation threshold above which the modulator enables the excitation radiation and below which the optical modulator prevents the excitation radiation.

Item 8: Fluorometer system according to one of the preceding items, wherein the radiation control devices is adapted to control the data acquisition device corresponding to a, preferably predetermined, excitation activation delay and/or excitation deactivation delay, wherein in particular the excitation activation delay and/or excitation deactivation delay is adapted in accordance with an activation threshold of the modulator.

Item 9: Fluorometer system according to one of the preceding items, wherein the radiation control device is configured to synchronize the timeframes and the excitation pulses.

Item 10: Fluorometer system according to one of the preceding items, wherein the at least two excitation sources are adapted to emit radiation with a wavelength in the range of 200 nm to 3000 nm, preferably in the visible range of 380 nm to 780 nm, wherein in particular

the at least two excitation sources comprise at least a first light source adapted to emit radiation with a first wavelength in the range of 380 nm to 430 nm, preferably a first wavelength of approximately 405 nm, and/or

the at least two excitation sources comprise at least a second light source adapted to emit radiation with a second wavelength in the range of 430 nm to 490 nm, preferably a second wavelength of approximately 473 nm, and wherein optionally

the at least two excitation sources comprise at least a third light source adapted to emit radiation with a third wavelength in the range of 490 nm to 570 nm, preferably a third wavelength of approximately 461 nm.

Item 11: Fluorometer system according to one of the preceding items, wherein the at least two optical detectors include a respective bandpass filter defining a respective spectrum width of less than 100 nm, in particular less than 50 nm, and/or defining a respective mean spectrum wavelength larger than the distinct wavelength of the respective associated excitation source, and/or defining a respective minimum spectrum wavelength larger than the distinct wavelength of the respective associated excitation source.

Item 12: Fluorescene analysis method for analyzing a fluid sample, comprising the steps:

a) providing a fluid sample, preferably wherein the fluid sample comprises a plurality of particles capable of being labeled with at least two fluorescent labels, such as two distinct fluorophores;

b) moving the fluid sample along a predetermined trajectory passing through a target zone at a predetermined rate;

c) subjecting the fluid sample with an excitation radiation of a distinct first wavelength for the duration of a first excitation pulse;

d) subjecting the fluid sample with an excitation radiation of a distinct second wavelength for the duration of a second excitation pulse;

e) detecting radiation emitted by the fluid sample in a first spectrum associated with the first wavelength;

f) detecting radiation emitted by the fluid sample in a second spectrum associated with the second wavelength;

wherein the fluid sample is subjected to excitation radiation from distinct excitation pulses while passing through the target zone; and wherein

measurement data associated with the detected radiation is gathered during individual timeframes corresponding to a respective associated excitation pulse.

Item 13: Fluorescence analysis method according to item 12, wherein the fluid sample is subjected to at least two, preferably 5 or 6, excitation pulses from each excitation source while passing through the target zone.

Item 14: Fluorescence analysis method according to item 12 or 13, wherein the first and/or second excitation pulse are maintained for a pulse duration in the range of 50 ns to 500 ns, in particular 100 ns to 300 ns, and/or a pulse duration which is longer than the fluorescence risetime of the fluorescent labels.

Item 15: Fluorescence analysis method according to one of the items 12 to 14, wherein at least one fluid sample is generated as a microdroplet sample, preferably containing an individual cell, labeled with at least one fluorophore, wherein preferably the microdroplet samples have an average width, in particular an average diameter, of no more than 500 $\mu$m, in particular no more than 100 $\mu$m.

Item 16: Fluorescence analysis method according to one of the items 12 to 15, wherein the timeframes are synchronized with the excitation pules.

Item 17: Fluorescence analysis method according to one of the items 12 to 16, wherein the timeframes are defined on the basis of the pulse duration and at least one excitation activation delay and/or excitation deactivation delay, for example in accordance with an activation threshold of a modulator.

Item 18: Fluorescence analysis method according to one of the items 12 to 17, wherein the distinct wavelengths for excitation are selected in the range of 200 nm to 3000 nm, preferably in the visible range of 380 nm to 780 nm, wherein in particular

that the distinct first wavelength is selected in the range of 380 nm to 430 nm, preferably a first wavelength of approximately 405 nm, and/or

that the distinct second wavelength is selected in the range of 430 nm to 490 nm, preferably a second wavelength of approximately 473 nm, and wherein optionally

that the distinct third wavelength is selected in the range of 490 nm to 570 nm, preferably a third wavelength of approximately 461 nm.

Item 19: Fluorescence analysis method according to one of the items 12 to 18, wherein radiation emitted by the fluorescent labels is filtered prior to detection in accordance with a bandpass filer defining he spectrum associated with the respective first or second or optionally third wavelength, wherein the spectrum to be detected is limited to a spectrum width of less than 100 nm, in particular less than 50 nm, preferably a spectrum defined by a mean spectrum wavelength.

Item 20: Fluorescence analysis method according to one of the items 12 to 19, wherein providing the at least one fluid sample includes labelling the at least one fluid sample with at least two fluorescent labels, such as fluorophores.

Item 21: A use of a fluorometer system according to items 1 to 11 and/or a fluorescence analysis method according to one of the items 12 to 20 for high-throughput multi wavelength fluorescence analysis.

Item 22: A use of a fluorometer system according to items 1 to 11 and/or a fluorescence analysis method according to one of the items 12 to 20 for fluorescence activated sorting, in particular in fluids.

Item 23: A use of a fluorometer system according to items 1 to 11 and/or a fluorescence analysis method according to one of the items 12 to 20 for fluorescence activated droplet fusion, in particular in fluids.

BRIEF DESCRIPTION OF THE FIGURES

The figures show:

Figure 1 A fluorometer system according to the invention;

Figure 2 a diagram illustrating multiple the excitation pulses from different excitation sources and radiation detected in associated spectra;

Figure 3a a microdroplet sample generator;

Figure 3b a detailed view of the microdroplet generator of Fig. 3a;

Figure 4 a diagram showing different excitation wavelengths and emission spectra;

Figure 5 droplet fluorescence signals obtained with varying cascade blue concentration;

Figure 6 droplet fluorescence signals obtained with varying fluorescine concentration;

Figure 7 droplet fluorescence signal distribution as acquired at nine equidistant concentrations by CW mode; and

Figures 8 droplet fluorescence signal distribution as acquired at nine equidistant concentrations by MESE mode;

Figure 9 droplet fluorescence signal distribution as acquired at nine equidistant concentrations by CW mode; and

Figures 10 droplet fluorescence signal distribution as acquired at nine equidistant concentrations by MESE mode.

EXAMPLES

Certain aspects and embodiments of the invention will now be illustrated by way of example and with reference to the description, figures and tables set out herein. Such examples of the methods, uses and other aspects of the present invention are representative only, and should not be taken to limit the scope of the present invention to only such representative examples.

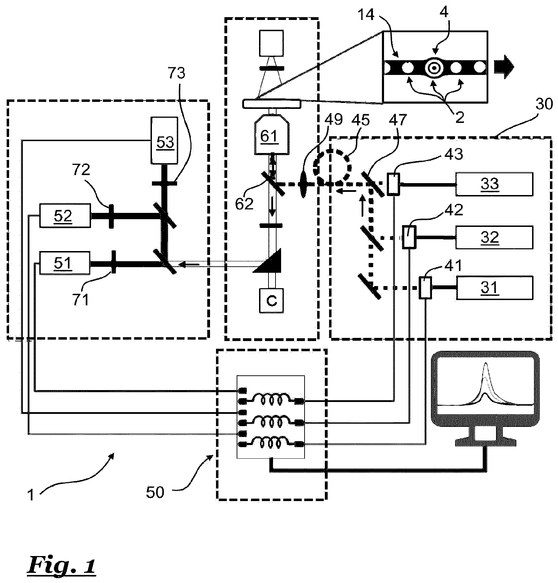

The Figure 1 shows a fluorometer system according for analyzing fluid samples to the invention generally designated with reference numeral 1.

The fluorometer system 1 comprises three excitation sources 31, 32, 33. The excitation sources 31, 32, 33 are realized as laser beam emitters. The first excitation source has a first characteristic laser wavelength or first excitation wavelength $\lambda 1$ of 405 nm (violet). The second excitation source has a second characteristic laser wavelength or second excitation wavelength $\lambda 2$ of 473 nm (blue). The third excitation source has a third characteristic laser wavelength or third excitation wavelength $\lambda 3$ of 561 nm (green). The laser beams (indicated with arrows) can be combined, particularly using mirrors, and sent to the target zone 4, for example in a microscope, through light guides such as optical fiber cables 45 and/or mirrors 47. Each excitation source 31, 32, 33, is equipped with a respective opto-acoustical modulator 41, 42, 43. A convex lens 49, for example having a 100 mm focal length, may be used to converge the laser beam on the microscope's objective lens 61 via a dichroic mirror 62 (403/497/574 nm triple beam splitter).

Microdroplet samples 2 travel along a predefined trajectory 14 which passes a target zone 4. The laser beams modulated by the modulators 41, 42, 43 so as to illuminate the target zone 4 in temporally distinct excitation pulses excite the droplet 2 in the target zone 4. Upon excitation, the droplet 2 emits radiation which is guided to optical detectors 51, 52, 53. The optical sensors each 51, 52, 53 include a respective photomultiplier tube. Each detector 51, 52, 53 includes at least one optical filter 71, 72, 73. The first optical filter 71 for the first optical detector 51 is configured as a (blue) 445/45 nm filter. The second optical filter 72 for the first optical detector 52 is configured as a (green) 525/45 nm filter. The first optical filter 73 for the first optical detector 53 is configured as a (red) 605/40 nm filter. The optical filters 71, 72, 73 serve to clean the emission signal and to define a respective channel bandwidth or detector bandwidth.

The fluorometer system 1 includes a data acquisition device 50 coupled with the optical sensors 51, 52, and 53 which may be realized as an FPGA (field programmable gate array). The data acquisition device 50 is associated with a radiation control device 30, which may be realized through the same FPGA or as a separate entity. The radiation control device 30 is configured to operate the excitation sources 31, 32, 33. For controlling the excitation sources 31, 32, 33, the radiation control device 30 may be configured to send activation signals to the excitation sources 31, 32, 33. In the present embodiment, the excitation sources 31, 32, 33 are laser emitters which are constantly turned on so as to emit a respective laser beam aimed at a respective modulator 41, 42, 43. The modulators 41, 42 and 43 are configured so as to block or otherwise deflect the excitation radiation such that it does not reach the target zone while the respective modulator is deenergized. Only when activated by the radiation controller 30 does one respective modulator 41, 42, or 43 allow the excitation radiation from its respective one excitation sources 31, 32, or 33 to pass towards the target zone 4. The radiation controller 30 is configured to emit a respective pulse modulated activation signal to only one of the modulators 41, 42 or 43. The radiation controller 30 is configured to activate the modulators 41, 42, 43 subsequently one after another for distinct excitation pulse durations d of for example 300 ns. Between subsequent excitation pulses, the radiation controller 30 may pause any activation signal for a pause duration p during which all modulators 41, 42, and 43 are deenergized. The pause duration p is preferably adapted to the excitation source such that it exceeds its falltime $\Delta t_F$ of the fluorescent labels so as to avoid crosstalk. The excitation pulse duration d may be adapted with respect to the fluorescent excitation source so as to exceed their respective risetime $\Delta t_R$. The risetime $\Delta t_R$ and falltime $\Delta t_F$ of the excitation source depends upon its electronic properties and the difference between the maximum activation signal, for example 3 V, provided by the radiation controller 3 during the excitation pulse, and the activation threshold $\alpha$, for example 2,5 V, starting at which the excitation source emits its characteristic radiation.

The timeframe t during which the data acquisition device 50 uses each optical detector 51, 52, and 53, respectively, is associated with the respective excitation pulse. Preferably, a first data acquisition timeframe t regarding a first detection bandwidth $\delta 1$ is synchronized with the first excitation pulse duration p during which the first excitation pulse is provided. A second timeframe t for a second detection bandwidth or emission spectrum $\delta 2$ is synchronized with the second excitation pulse duration d of the second excitation source, etc. The data acquisition device 50 and the radiation controller 30 are adapted to one another such that data is only gathered for one specific emission bandwidth $\delta 1$, $\delta 2$, or $\delta 3$ while the associated excitation pulse of one corresponding excitation source 31, 32, or 33 subjects the sample 2 in the target zone 4 to its radiation of its distinct excitation wavelength $\lambda 1$, $\lambda 2$, or $\lambda 3$. Thereby, each detection channel is only operated when also the excitation associated therewith occurs in order to avoid crosstalk. The excitation wavelengths $\lambda 1$, $\lambda 2$ and $\lambda 3$ lie outside of the predefined emission spectra $\delta 1$, $\delta 2$, and $\delta 3$.

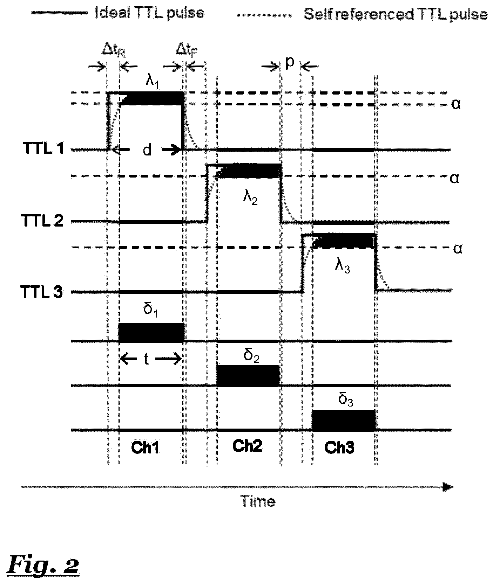

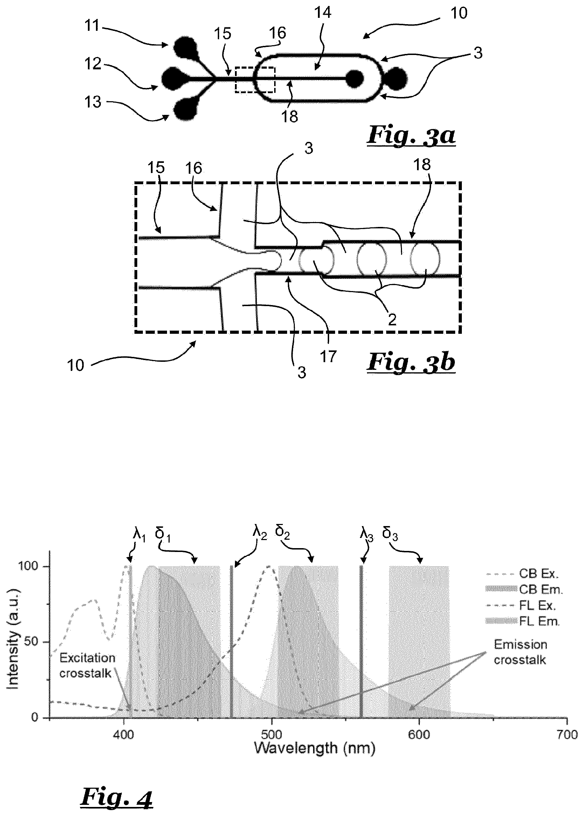

Figures 2 and 3 show three activation pulse modulated activation signals TTLi, TTL2 and TTL3, which switch from a low or deenergized level (for example oV) to a high or energized level (for example 3 V), for operating the modulators 41, 42, 43, and the synchronized optical detection of the emission bandwidths $\delta 1$, $\delta 2$, and $\delta 3$. The time delay between ideal TTL pulse and self-reference signal due to rise time is $\Delta t_R$ while $\Delta t_F$ is the delay due to fall time. The self reference signal may be provided by the data acquisition device 50 for the optical detectors 51, 52, and 53. For signal modulation, data acquisition and possibly real-time analysis, a a computer implemented method, such as an FPGA algorithm, may be used. The mehod can be implemented using LabVIEW FPGA module running on a NI PXIe 7856R FPGA card with a clock rate of 40 MHz. As indicated in Fig. 4, method may sequentially generate separate TTL (Transistor-Transistor Logic) pulses with PWM (Pulse-width Modulation) for each modulator 41, 42, or 43 at a frequency of for example 108 kHz with low and high, for example at 0 V and 3 V respectively.

The features disclosed in the above description, the figures and the claims may be significant for the realization of the invention in its different embodiments individually as in any combination.

As shown in Figures 3a and 3b, fluid samples can be created for example as microfluidic samples in the form of aqueous phase microdroplets 2 monodispersed in a hydrophobic oil as a carrier medium 3. In the present example, an aqueous phase is first provided with several different fluorescent labels. Therefore, three application means 11, 12, 13 are provided. The first application means 11 provides fluorescein (FL) as a fluorophore for the sample. The second application means 12 provides cascade blue (CB). The third application means 13 provides phosphate buffered saline (PBS). The droplet generator 10 has a first microchannel 15 which is fed from the application means 11, 12 and 13. The first microchannel 15 has a relatively large cross-section, with a first width of for example 100 $\mu$m. The droplet generator 10 includes a T-junction formed by the first microchannel 15 and two mutually opposite second channels 16 which are arranged approximately perpendicular to the first microchannel 15. The second channels 16 have essentially the same cross-section as the first microchannel 15 and serve to guide the hydrophobic oil to the T-junction. From the T-junction of the droplet generator, a narrow channel 17 extends, which is aligned with the first microchannel 15 but has a smaller cross section. The width of the narrow channel 17 may for example be approximately 50 $\mu$m. The length of the narrow channel 17 is in the range of 1-3 times the width of the first channel 15. Thereafter, the narrow channel 17 leads to a third micro channel 18 which defines the trajectory 14 of the samples. The third micro channel 18 has essentially the same width, for example of 100 $\mu$m, as the first channel. The flow of the aqueous phase through the first channel 15 and the oil through the second channels 16 is adapted to one another such that mircrodroplets 2 of the aqueous phase are formed as samples passing through the third micro channel 18. The target zone 4 is realized by focussing the excitation light rays on spot along the trajectory 14 defined by the third micro channel 18.

As indicated in Fig. 4, these fluorophores serve as a reference example and are selected such that the data acquired in the first emission spectrum $\delta 1$ will not have any crosstalk and would serve as a control for signal comparison. On the other hand, the second emission spectrum $\delta 2$ can be expected to have the emission signals from FL as well as a fraction of CB emission due to crosstalk from the first excitation source 31. Any emission detected in in the third emission spectrum $\delta 3$ may include crosstalk from emissions caused by the first and/or second excitation source 31, 32.

In the tests described below, droplet generation and data acquisition are gradually changed via controlling the flow rates of syringe pumps which act as the application means 11, 12, and 13 to adjust the ratios of aqueous phases containing fluorophores (CB, FL and PBS) in the droplets to match the different concentrations, and acquiring the data in both a modulated laser- synchronized emission (MESE) mode and, as a reference, in an unmodulated continuous wave (CW) mode.

Tests

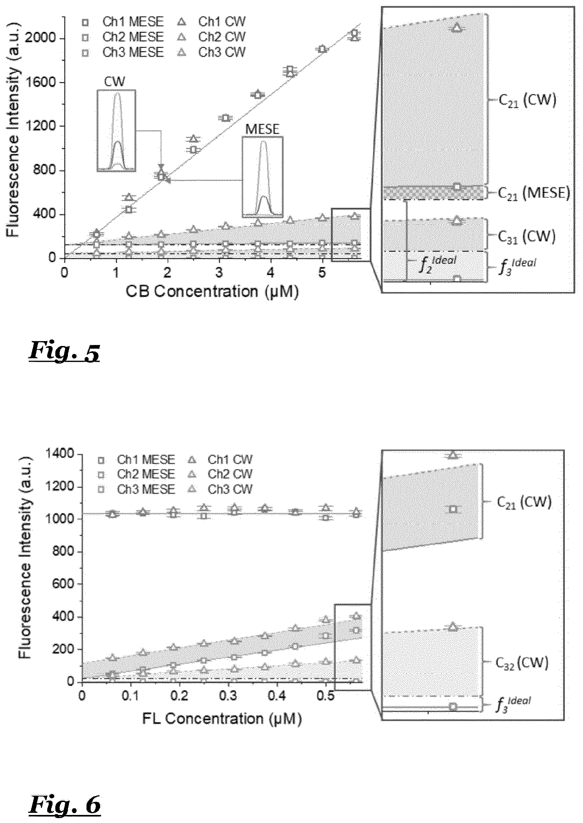

A first test, as indicated by the graph shown in Figs. 5 and 6, was performed generated droplets 2 containing a constant FL concentration (0.22 $\mu$M) while the CB concentration was gradually increased from 0.6 - 6 $\mu$M to analyze the crosstalk in the second and third emission spectra $\delta 2$ and $\delta 3$ caused by the first excitation source 31. Ideally, the slope of signals in Ch2 and Ch3 should be zero, and any non-zero slope in these channels is a consequence of crosstalk due to rising concentration of CB as seen as the shaded area in Fig. 5. Any crosstalk induced excess signal in MESE and CW mode as compared to ideal signal can thus be calculated as follows:

$$f_i^{mode} = f_i^{Ideal} + C_{ij} * f_j^{mode} \tag{1}$$

Here, $C_{ij}$ the crosstalk factor i.e. the fraction of signals from channel j that are leaked into the channel i. $f_i^{mode}$ is the mean amplitude of the droplet fluorescence signals at a particular concentration as obtained by mode in consideration (MESE or CW) in channel i. $f_i^{Ideal}$ is the ideal fluorescence signal that would be acquired in absence of crosstalk and is estimated by calculating the intercept of the linear function that fits the $f_i^{mode}$ distribution (Fig. 5). The mean values of $C_{21}$ and $C_{31}$ calculated for MESE and CW signals is shown below in Table 1.

| | Description | Crosstalk factor in CW $C_{ij}(CW)$ | Crosstalk factor in MESE $C_{ij}(MESE)$ | Crosstalk reduction by MESE $(C_{ij}(CW) - C_{ij}(MESE)/C_{ij}(CW)$ |
|---|---|---|---|---|
| $C_{21}$ | Crosstalk in Ch2 (Green) from Ch1 (Blue) | $0.14 \pm 0.015$ | $0.0091 \pm 0.0045$ | 93.38 % |
| $C_{31}$ | Crosstalk in Ch3 (Red) from Ch1 (Blue) | $0.0212 \pm 0.006$ | $0.00009 \pm 0.0003$ | 99.57 % |
| $C_{32}$ | Crosstalk in Ch3 (Red) from Ch2 (Green) | $0.35 \pm 0.057$ | $0.0022 \pm 0.0003$ | 99.36 % |

Similarly, $C_{32}$ was calculated by analyzing droplet fluorescence signals that have a constant CB concentration (2.22 $\mu$M) and a gradually increasing concentration of FL from 0.06 to 0.6 $\mu$M (Fig. 6). The total crosstalk reduction by MESE as compared to CW mode is calculated as 93.38 %, 99.57 % and 99.36 % between $\lambda 1$-$\delta 2$ (Chi-Ch2), $\lambda 1$-$\delta 3$ (Ch1-Ch3) and $\lambda 2$-$\delta 3$ (Ch2-Ch3) respectively.

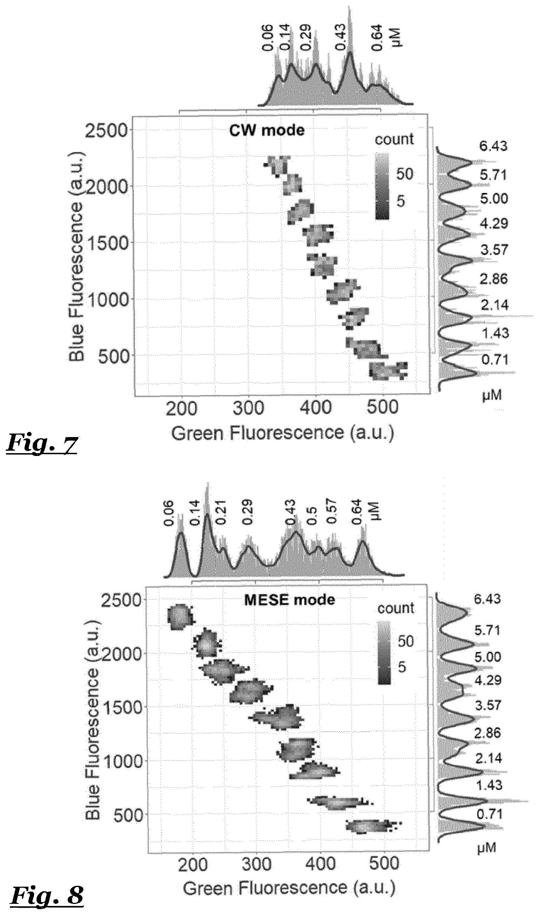

Figures 7 to 10 shows the droplet fluorescence signal distribution as acquired at nine equidistant concentrations by CW and MESE modes. The blue fluorescence by CB showed considerably separated populations in both modes primarily because the difference between two consecutive concentration was high (~ 0.7 $\mu$M) along with other factors like the overall high signals from CB due to higher concentration and higher overlap of its excitation spectra with the excitation wavelength (405 nm) (Figure 7 and 8). On the other hand, the population distribution in green fluorescence signals showed overlapped populations in both modes. The signals in MESE mode showed 8 distinct peaks as compared to 5 distinct peaks in CW mode demonstrating the improvement of signal resolution by MESE (Figures 7 and 8). Moreover, at low FL concentrations (0.06 to 0.29 $\mu$M), MESE showed considerably higher separation suggesting a higher resolution due to crosstalk reduction when the analyte concentration or the emission signal strength is low.

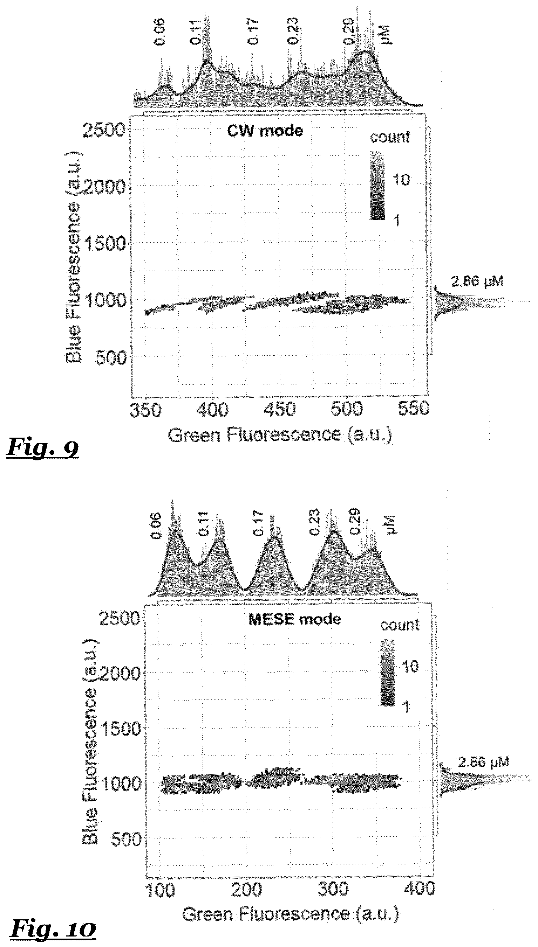

To evaluate the effect of crosstalk on signal resolution at low analyte concentrations, we conducted another experiment where the green fluorescence was acquired at five distinct FL concentration (varied from 0.06 to 0.29 $\mu$M) while the CB concentration was kept constant at 2.86 $\mu$M. We observed that MESE was successfully able to resolve the green fluorescence signals into five distinct peaks separated by a concentration difference of ~0.06 $\mu$M whereas the CW showed only two distinct peaks separated by a concentration difference of 0.18 $\mu$M (Figures 9 and 10).

It can be concluded that Modulated Excitation-Synchronous Emission based fluorescence signal acquisition provides higher (~3 fold) resolution as compared to the state of art microfluidic workstation that uses continuous wave excitation.

REFERENCE SIGN LIST

The reference signs are:

| | |
|---|---|
| 1 | fluorometer system |
| 2 | microdroplet sample |
| 3 | carrier medium |
| 4 | target zone |
| 10 | microdroplet generator |
| 11, 12, 13 | application means |
| 14 | trajectory |
| 15, 16, 17, 18 | microchannel |
| 30 | radiation control device |
| 31 | first excitation source |
| 32 | second excitation source |
| 33 | third excitation source |
| 41, 42, 43 | acousto-optic-modulator |
| 45 | fiber optic cable |
| 47 | mirror |
| 49 | lens |
| 50 | data acquisition device |
| 51 | first optical detector |
| 52 | second optical detector |
| 53 | third optical detector |

d    excitation pulse duration

t    timeframe

p    pause

$\Delta t_R$   risetime/excitation activation delay

$\Delta t_F$   falltime/ excitation deactivation delay

$\alpha$    activation threshold

$\lambda 1$   first excitation wavelength

$\lambda 2$   second excitation wavelength

$\lambda 3$   third excitation wavelength

$\delta 1$   first emission spectrum

$\delta 2$   first emission spectrum

$\delta 3$   first emission spectrum

**Claims**

1. **Fluorometer system for analyzing fluid samples comprising a plurality of particles capable of being labeled with at least two fluorescent labels, in** particular two distinct fluorophores, comprising:

    at least two excitation sources adapted to emit radiation of a distinct wavelength for excitation of the at least two fluorescent labels;
    at least two optical detectors for detecting radiation in a respective spectrum;
    wherein each optical detector is associated with one respective excitation source,
    a radiation control device configured to operate the excitation sources individually in temporally discrete excitation pulses;
    a data acquisition device coupled to the optical detectors;
    wherein the radiation control device is linked to the data acquisition device such that measurement data is gathered from each optical detector individually during a timeframe corresponding to the excitation pulse of the associated excitation source,
    a predefined trajectory along which the fluid samples are led, wherein the predefined trajectory passes through a target zone for exposing the fluid samples to the radiation from the at least two excitation sources,
    a fluid sample generator for providing the fluid samples to the predefined trajectory,
    a fluid control device configured to cause the fluid sample generator to set a predefined rate at which the fluid samples travel through the predefined target zone,
    wherein the radiation control device and the fluid control device are adapted to one another such that at least one respective excitation pulse from each of the at least two excitation sources is at least as fast as the predefined rate.

2. Fluorometer system according to claim 1, wherein the radiation control device is adapted to the fluid control device for subjecting each one of the fluid samples to at least two, preferably 5 or 6, excitation pulses from each excitation source.

3. Fluorometer system according to claim 1 or 2, wherein the radiation control device is configured to operate the excitation sources to emit excitation pulses having an excitation pulse duration greater than a fluorescence risetime of the fluorescent labels and/or having an excitation pulse duration in the range of 50 ns to 1000 $\mu$s, in particular 100 ns to 500 $\mu$s, more particularly 100 ns to 500 ns.

4. Fluorometer system according to one of the preceding claims, wherein the fluid sample generator is a microdroplet generator for creating microdroplet samples, wherein the microdroplet samples each comprise one or more particles of the plurality of particles, preferably wherein the one or more particles are selected from one or more cell(s) and/or one or more non-cell particle(s), wherein preferably the microdroplet samples comprise microdroplets generated to have an average width, in particular an average diameter, of no more than 500 $\mu$m or no more than 250 $\mu$m, in particular no more than 100 $\mu$m.

5. Fluorometer system according to claim 4, wherein the fluid sample generator is a fluid system, in particular a flow focusing droplet generator, for monodispersion of aqueous microdroplet samples in an inert carrier medium, such as an oil, preferably a hydrophobic and/or lipophobic oil, wherein the predetermined trajectory is defined by a fluid channel.

6. Fluorometer system according to claim 4, wherein the fluid sample generator is a microdroplet dispenser, such as an ultrasonic nozzle vibrator, wherein the trajectory is defined downstream, preferably in a substantially vertical falling direction downward, of the fluid sample generator or by a channel, in particular a fluid channel.

7. Fluorometer system according to one of the preceding claims, wherein at least two excitation sources comprise at least one respective modulator for defining the excitation pulses, in particular an optical modular, preferably an acousto-optic-modulator, wherein in particular the modulator has an activation threshold above which the modulator enables the excitation radiation and below which the optical modulator prevents the excitation radiation.

8. Fluorometer system according to one of the preceding claims, wherein the radiation control devices is adapted to control the data acquisition device corresponding to a, preferably predetermined, excitation activation delay and/or excitation deactivation delay, wherein in particular the excitation activation delay and/or excitation deactivation delay is adapted in accordance with an activation threshold of the modulator.

9. Fluorometer system according to one of the preceding claims, wherein the radiation control device is configured to synchronize the timeframes and the excitation pulses.

10. Fluorometer system according to one of the preceding claims, wherein the at least two excitation sources are adapted to emit radiation with a wavelength in the range of 200 nm to 3000 nm, preferably in the visible range of 380 nm to 780 nm, wherein in particular
the at least two excitation sources comprise at least a first light source adapted to emit radiation with a first wavelength in the range of 380 nm to 430 nm, preferably a first wavelength of approximately 405 nm, and/or the at least two excitation sources comprise at least a second light source adapted to emit radiation with a second wavelength in the range of 430 nm to 490 nm, preferably a second wavelength of approximately 473 nm, and wherein optionally the at least two excitation sources comprise at least a third light source adapted to emit radiation with a third wavelength in the range of 490 nm to 570 nm, preferably a third wavelength of approximately 461 nm.

11. Fluorometer system according to one of the preceding claims, wherein the at least two optical detectors include a respective bandpass filter defining a respective spectrum width of less than 100 nm, in particular less than 50 nm, and/or defining a respective mean spectrum wavelength larger than the distinct wavelength of the respective associated excitation source, and/or defining a respective minimum spectrum wavelength larger than the distinct wavelength of the respective associated excitation source.

12. **Fluorescence analysis method for analyzing a fluid sample,** comprising the steps:

   a) providing a fluid sample, preferably wherein the fluid sample comprises a plurality of particles capable of being labeled with at least two fluorescent labels, such as two distinct fluorophores;
   b) moving the fluid sample along a predetermined trajectory passing through a target zone at a predetermined rate;
   c) subjecting the fluid sample with an excitation radiation of a distinct first wavelength for the duration of a first excitation pulse;
   d) subjecting the fluid sample with an excitation radiation of a distinct second wavelength for the duration of a second excitation pulse;
   e) detecting radiation emitted by the fluid sample in a first spectrum associated with the first wavelength;
   f) detecting radiation emitted by the fluid sample in a second spectrum associated with the second wavelength;
   wherein the fluid sample is subjected to excitation radiation from distinct excitation pulses while passing through the target zone; and wherein
   measurement data associated with the detected radiation is gathered during individual timeframes corresponding to a respective associated excitation pulse.

13. Fluorescence analysis method according to claim 12, wherein the fluid sample is subjected to at least two, preferably 5 or 6, excitation pulses from each excitation source while passing through the target zone.

14. Fluorescence analysis method according to claim 12 or 13, wherein the first and/or second excitation pulse are maintained for a pulse duration in the range of 50 ns to 500 ns, in particular 100 ns to 300 ns, and/or a pulse duration which is longer than the fluorescence risetime of the fluorescent labels.

15. Fluorescence analysis method according to one of the claims 12 to 14, wherein at least one fluid sample is generated as a microdroplet sample, preferably containing an individual cell, labeled with at least one fluorophore, wherein preferably the microdroplet samples have an average width, in particular an average diameter, of no more than 500 μm or no more than 250 μm, in particular no more than 100 μm.

16. Fluorescence analysis method according to one of the claims 12 to 15, wherein the timeframes are synchronized with the excitation pules.

17. Fluorescence analysis method according to one of the claims 12 to 16, wherein the timeframes are defined on the basis of the pulse duration and at least one excitation activation delay and/or excitation deactivation delay, for example in accordance with an activation threshold of a modulator.

18. Fluorescence analysis method according to one of the claims 12 to 17, wherein the distinct wavelengths for excitation are selected in the range of 200 nm to 3000 nm, preferably in the visible range of 380 nm to 780 nm, wherein in particular that the distinct first wavelength is selected in the range of 380 nm to 430 nm, preferably a first wavelength of approximately 405 nm, and/or that the distinct second wavelength is selected in the range of 430 nm to 490 nm, preferably a second wavelength of approximately 473 nm, and wherein optionally that the distinct third wavelength is selected in the range of 490 nm to 570 nm, preferably a third wavelength of approximately 461 nm.

19. Fluorescence analysis method according to one of the claims 12 to 18, wherein radiation emitted by the fluorescent labels is filtered prior to detection in accordance with a bandpass filer defining he spectrum associated with the respective first or second or optionally third wavelength, wherein the spectrum to be detected is limited to a spectrum width of less than 100 nm, in particular less than 50 nm, preferably a spectrum defined by a mean spectrum wavelength.

20. Fluorescence analysis method according to one of the claims 12 to 19, wherein providing the at least one fluid sample includes labelling the at least one fluid sample with at least two fluorescent labels, such as fluorophores.

21. **A use of a fluorometer system** according to any one of claims 1 to 11 and/or a fluorescence analysis method according to any one of the claims 12 to 20:

(i) for high-throughput multi wavelength fluorescence analysis; or
(ii) flow cytometry or fluorescence activated sorting, in particular in fluids; or
(iii) fluorescence activated droplet fusion, in particular in fluids.

*Fig. 1*

*Fig. 2*

*Fig. 3a*

*Fig. 3b*

*Fig. 4*

**_Fig. 5_**

**_Fig. 6_**

**_Fig. 7_**

**_Fig. 8_**

**Fig. 9**

**Fig. 10**

Europäisches
Patentamt

European
Patent Office

Office européen
des brevets

# EUROPEAN SEARCH REPORT

**Application Number**

EP 22 18 4197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/194805 A1 (AUANTALIFE INC A DELAWARE CORP [US]; NESS KEVIN D [US] ET AL.) 2 August 2012 (2012-08-02)<br>* paragraphs [0003] – [0006], [0027], [0041], [0052], [0056] – [0074], [0080], [0098], [0112], [0113]; figures 2,3,5,6 * | 1–21 | INV.<br>G01N15/14<br>G01N21/63<br>G01N21/64 |
| X | US 2012/091366 A1 (DURACK GARY [US] ET AL) 19 April 2012 (2012-04-19)<br>* paragraphs [0042], [0049] – [0054], [0060] – [0063], [0072]; figures 1-5,8 * | 1–21 | |
| X | US 2009/122311 A1 (KANDA MASAHIKO [JP]) 14 May 2009 (2009-05-14)<br>* paragraphs [0005], [0045] – [0058], [0066] – [0067] * | 1–21 | |

TECHNICAL FIELDS
SEARCHED      (IPC)

G01N

The present search report has been drawn up for all claims

| Place of search | Date of completion of the search | Examiner |
|---|---|---|
| The Hague | 14 December 2022 | Haenssler, Thedda |

EPO FORM 1503 03.82 (P04C01)

## ANNEX TO THE EUROPEAN SEARCH REPORT
## ON EUROPEAN PATENT APPLICATION NO.

EP 22 18 4197

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | Publication date | Patent family member(s) | | Publication date |
|---|---|---|---|---|---|
| US 2012194805 | A1 | 02-08-2012 | CA | 2767113 A1 | 29-09-2011 |
| | | | EP | 2550351 A1 | 30-01-2013 |
| | | | JP | 2013524169 A | 17-06-2013 |
| | | | US | 2012194805 A1 | 02-08-2012 |
| | | | WO | 2011120006 A1 | 29-09-2011 |
| US 2012091366 | A1 | 19-04-2012 | US | 2008213915 A1 | 04-09-2008 |
| | | | US | 2012091366 A1 | 19-04-2012 |
| US 2009122311 | A1 | 14-05-2009 | DE | 112006002091 T5 | 10-07-2008 |
| | | | JP | 4756948 B2 | 24-08-2011 |
| | | | JP | 2007046947 A | 22-02-2007 |
| | | | US | 2009122311 A1 | 14-05-2009 |
| | | | WO | 2007018087 A1 | 15-02-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAZUTIS, L. et al.** Single-cell analysis and sorting using droplet-based microfluidics. *Nature Protocols,* 2013, vol. 8 (5), 870-981
- **BAGWELL, C.B. ; ADAMS, E.G.** Fluorescence Spectral Overlap Compensation for Any Number of Flow Cytometry Parameters. *Annals of the New York Academy of Sciences,* 1993, vol. 677 (1), 167-184

- **CHEVRIER, S. et al.** Compensation of Signal Spillover in Suspension and Imaging Mass Cytometry. *Cell Systems,* 2018, vol. 6 (5), 612-620.e5